# EUROPÄISCHE PATENTANMELDUNG

(11) **EP 3 176 396 A1**
(43) Veröffentlichungstag der Anmeldung: **07.06.2017**
(21) Anmeldenummer: 15198055.4
(22) Anmeldetag: 04.12.2015
(51) Int. Cl.: F01N 3/05, F01N 3/20, F02B 37/10, F02B 37/16, F02D 41/02, F02D 41/00, F02B 29/04

(54) **VERBRENNUNGSMOTOR UND VERFAHREN ZUM OPTIMIEREN EINE ABGASNACHBEHANDLUNG**

(71) Anmelder: Winterthur Gas & Diesel Ltd., 8401 Winterthur (CH)
(72) Erfinder: Brutsche, Martin, 8400 Winterthur (CH)
(74) Vertreter: Hepp Wenger Ryffel AG

(57) **Zusammenfassung**

Ein Verbrennungsmotor (1), insbesondere 2-Takt Schiffsmotor, bevorzugt Kreuzkopfverbrennungsmotor umfasst zumindest einen, bevorzugt eine Vielzahl von Zylindern, die mit einem Abgasreceiver (2) verbunden sind und einen SCR-Reaktor (3), dessen Eingang (3a) mit einem Ausgang (2b) des Abgasreceivers (2) verbunden ist. Der Verbrennungsmotor (1) umfasst einen Turbolader (4) mit einer Turbine (5) und einem Kompressor (6), wobei der Turbineneingang (5a) mit einem Ausgang (3b) des SCR-Reaktors (3) über einen Turbinenpfad (7) verbunden ist, wobei die Turbine (5) des Turboladers (4) den Kompressor (6) antreibt und dessen Kompressorausgang (6b) über einen Ladeluftpfad (8) mit einem Ladeluftreceiver (9) verbunden ist. Der Ladeluftreceiver (9) ist mit einem Lufteinlass der Zylinder des Verbrennungsmotors (1) verbunden und der Ladeluftpfad (8) umfasst einen Ladeluftkühler (11). Der Ladeluftreceiver (9) umfasst ein Ablassventil (22).

## Beschreibung

Die vorliegende Erfindung richtet sich auf einen Verbrennungsmotor sowie ein Verfahren zum Optimieren der Abgasnachbehandlung eines Verbrennungsmotors gemäss dem Oberbegriff der unabhängigen Ansprüche.

Die Verwendung von selektiven katalytischen Reduktions-Reaktoren (nachfolgend SCR-Reaktor) zur Durchführung der selektiven katalytischen Reduktion (SCR) bei Verbrennungsmotoren ist bekannt. Des Weiteren ist die Problematik der zu tiefen Abgastemperaturen bekannt, bei denen die selektive katalytische Reduktion nicht ausreichend funktioniert.

Derartige zu niedrige Abgastemperaturen treten insbesondere bei niedrigen Motorleistungen, beispielsweise weniger als 40 Prozent der maximalen Dauerleistung, auf.

Insbesondere bei Schiffsmotoren von grossen Schiffen wurden die Emissionsanforderungen immer weiter erhöht, insbesondere in Bezug auf NO_{X} Ausstoss. Ein zuverlässiges Funktionieren der selektiven katalytischen Reduktion auch bei niedrigen Motorlasten ist daher zwingend notwendig.

Aus der DK 177 631 ist eine Lösung dieses Problems bekannt, bei der ein Bypass von einer Position nach einem Hilfsgebläse oder vom Ladeluftreceiver direkt zu einer Position in einer Leitung zwischen dem SCR-Katalysator und dem Turbineneinlass führt. Durch diese Massnahme wird die Abgastemperatur für Abgase, die in den SCR eintreten, erhöht. Nachteilig bei dieser Variante ist, dass durch die direkte Verbindung von Ladeluftreceiver und Turbine Druck und Temperatur der Ladeluft gleichzeitig für den Motor und für den Betrieb des SCR-Katalysators optimiert werden müssen. Des Weiteren ist insbesondere bei niedrigen Motorleistungen der Einsatz eines Hilfsgebläses vor dem Ladeluftreceiver zum Betrieb des Motors aufgrund der zu geringen Turboladerleistung notwendig. Die Abnahme von Luft stromabwärts des Hilfsgebläses führt daher gerade bei niedrigen Lasten zur Abnahme von Luft von einem hohen Druckniveau, also hoher Energie, und Führen dieser energiereichen Luft zurück auf die Turbine. Dadurch wird der Turboladerwirkungsgrad erhöht, was wiederum zu höherem Druck nach dem Turbolader und dadurch einem besseren Verbrennungswirkungsgrad führt. Dieser bessere Verbrennungswirkungsgrad führt zu eine niedrigeren Abgastemperatur, was gerade nicht gewünscht ist.

Es ist daher Aufgabe der vorliegenden Erfindung die Nachteile des Standes der Technik zu vermeiden und einen Verbrennungsmotor zu schaffen, der optimal auf die notwendige Temperatur des Abgases für die selektive katalytische Reduktion und gleichzeitig optimal für den Verbrennungsprozess des Motors eingestellt werden kann.

Die Aufgabe wird durch einen Verbrennungsmotor sowie ein Verfahren zum Optimieren der Abgasnachbehandlung gemäss dem kennzeichnenden Teil der unabhängigen Ansprüche gelöst.

Insbesondere wird die Aufgabe durch einen Verbrennungsmotor, insbesondere zwei-Takt Schiffsmotor, bevorzugt Kreuzkopfverbrennungsmotor, gelöst, der zumindest einen, bevorzugt eine Vielzahl von Zylindern umfasst, die mit einem Abgasreceiver verbunden sind. Der Verbrennungsmotor umfasst weiterhin einen SCR-Reaktor, dessen Eingang mit einem Ausgang des Abgasreceivers verbunden ist. Weiterhin umfasst der Verbrennungsmotor einen Turbolader mit einer Turbine und einem Kompressor, wobei der Turbineneingang mit einem Ausgang des SCR-Reaktors über einen Turbinenpfad verbunden ist. Die Turbine des Turboladers treibt den Kompressor an und der Kompressorausgang des Turboladers ist über einen Ladeluftpfad mit einem Ladeluftreceiver verbunden. Der Ladeluftreceiver ist mit einem Lufteinlass der Zylinder des Verbrennungsmotors verbunden und der Ladeluftpfad umfasst bevorzugt einen Ladeluftkühler. Der Ladeluftreceiver umfasst ein Ablassventil.

Mit einem derartigen Verbrennungsmotor kann durch Ablassen von Luft aus dem Ladeluftreceiver die Temperatur des Abgases aus dem Verbrennungsprozess erhöht werden. Das Ablassventil ist derartig ausgestaltet, dass die Luft aus dem Ablassventil nicht in den Prozess zurückgeführt wird, sondern direkt oder indirekt in die Umgebung abgeführt wird.

Ein Frischluftpfad kann mit dem Turbinenpfad verbunden sein, so dass Frischluft in den Turbinenpfad einbringbar ist, wobei bevorzugt in dem Frischluftpfad eine Temperiervorrichtung ausgebildet ist.

Der Frischluftpfad hat im Rahmen dieser Erfindung keine direkte Verbindung durch strömende Luft zum Ladeluftreceiver oder zum Kompressor des Turboladers stromaufwärts des Ladeluftreceivers. Es handelt sich daher nicht um eine Umgehungsleitung.

Eine Temperiervorrichtung kann als Kühler oder Heizvorrichtung ausgebildet sein, oder eine Kombination von Kühl- und Heizvorrichtung sein.

Eine derartige Vorrichtung ermöglicht die separate Anpassung von Ladeluftdruck im Ladeluftreceiver und Zuführung von temperierter Frischluft in den Turbinenpfad, so dass auch die Turboladerleistung steuerbar ist. Weiterhin lässt sich die Stabilität der Turboladerdrehzahl optimieren.

Der Frischluftpfad kann eine Druckerhöhungsvorrichtung umfassen.

Somit lässt sich das Druckniveau der Frischluft auf oder über das Druckniveau des Abgases nach dem SCR-Reaktor erhöhen, so dass ein zuverlässiges Einströmen aus dem Frischluftpfad in den Turbinenpfad möglich ist.

Die Druckerhöhungsvorrichtung kann durch eine Zusatzturbine antreibbar sein, wobei die Zusatzturbine durch Luft aus dem Ladeluftreceiver und/oder elektrisch antreibbar ist.

Somit wird die Energie der Luft, die aus dem Ladeluftreceiver abgelassen wird, für die Erhöhung des Druckes der Frischluft im Frischluftpfad genutzt.

Der Frischluftpfad kann durch eine Frischluftpfadabtrennvorrichtung vom Turbinenpfad abtrennbar sein. Eine derartige Abtrennvorrichtung kann ein Ventil, eine Klappe, ein Rückschlagventil oder eine Kombination der genannten Elemente sein.

Die Frischluftpfadabtrennvorrichtung ist bevorzugt zwischen Druckerhöhungsvorrichtung und Turbinenpfad, insbesondere bevorzugt zwischen Temperiervorrichtung und Turbinenpfad, weiter insbesondere bevorzugt zwischen Wasserabscheider und Turbinenpfad angeordnet.

Somit lässt sich die Zufuhr von Frischluft in den Turbinenpfad zu- oder abschalten, bevorzugt steuern und ein Eintreten von Abgas in den Frischluftpfad verhindern.

Somit lässt sich der Verbrennungsmotor auch ohne Frischluftzufuhr in den Turbinenpfad betreiben, insbesondere in einem Betriebszustand, in dem die Abgastemperatur für einen zuverlässigen Betrieb des SCR-Reaktors ausreicht. Zusätzlich wird ein Eintreten von Abgas in den Frischluftpfad verhindert.

Zwischen Abgasauslass des Verbrennungsmotors und SCR Reaktor kann ein Harnstoffinjektor ausgebildet sein, wobei bevorzugt in einem Bereich zwischen Abgasauslass und Harnstoffinjektor, insbesondere bevorzugt kurz vor dem Harnstoffinjektor, ein Temperatursensor angeordnet ist.

Durch den Einsatz von Harnstoff wird die Reduktion von NOx optimiert.

Im Bereich zwischen Abgasauslass des Verbrennungsmotors und Turbine des Turboladers kann ein Temperatursensor zur Messung der Abgastemperatur angeordnet sein. Bevorzugt kann im SCR-Reaktor oder am Eingang des SCR-Reaktors ein Temperatursensor zur Messung der Abgastemperatur ausgebildet sein. Insbesondere kann der Temperatursensor direkt hinter einer letzten Katalysatorlage angeordnet sein. Die Anordnung eines Temperaturssensors kann alternativ oder zusätzlich in der Abgasleitung zwischen Abgasauslass des Verbrennungsmotors und SCR-Reaktor liegen, insbesondere in einem Bereich zwischen Abgasauslass des Motors bis zu einer Harnstoffeindüsung vor dem SCR-Reaktor, bevorzugt im Abgasrohr, insbesondere bevorzugt kurz vor der Harnstoffeindüsung. Ein derartiger Temperatursensor ermöglich die genaue Bestimmung der Temperatur des Abgases und somit eine direkte Regelung der Abgastemperatur basierend auf den Messwerten. Zusätzlich kann die Abgastemperatur im Bereich der Harnstoffeindüsung bestimmt werden, so dass das Abgas in einem für die Harnstoffeindüsung optimalen Bereich gehalten werden kann.

Zwischen Abgasreceiver und Turbinenpfad kann eine SCR-Umgehungsleitung ausgebildet sein, die ein SCR-Umgehungsventil umfasst, sodass der SCR-Reaktor umgehbar ist.

Eine SCR-Umgehungsleitung ermöglicht das Weiterbetreiben des Motors auch bei einer Fehlfunktion des SCR-Reaktors und dient somit der Betriebssicherheit des Motors.

Der Frischluftpfad kann einen Wasserabscheider umfassen, bevorzugt angeordnet stromabwärts der Temperiervorrichtung.

Somit gelangt auch nur möglichst trockene Luft zurück in die Turbine, sodass auch in der Turbine möglichst wenig Korrosion auftritt. Insbesondere bei Abkühlung der Luft in der Temperiervorrichtung ist die Verwendung eines Wasserabscheiders durch die geringer Wasseraufnahmekapazität der kälteren Luft vorteilhaft.

Der Ladeluftpfad kann einen Wasserabscheider umfassen, bevorzugt angeordnet stromabwärts des Ladeluftkühlers.

Somit lässt sich Feuchtigkeit aus der Ladeluft entfernen und die Luft gelangt möglichst trocken in den Verbrennungsraum. Somit entsteht weniger Korrosion.

Der Verbrennungsmotor kann eine Steuerungseinheit umfassen, wobei die Frischluftzufuhr durch den Frischluftpfad durch die Steuerungseinheit und/oder das Ablassen von Luft aus dem Ladeluftreceiver steuerbar ist, bevorzugt abhängig von einem gemessenen Temperaturwert des Temperatursensors. Alternativ kann die Steuerung abhängig vom Lastzustand des Motors ausgebildet sein.

Insbesondere sind die Frischluftpfadabtrennvorrichtung und/oder das Ablassventil durch die Steuerungseinheit steuerbar.

Weiterhin kann die Steuerungseinheit die Temperiervorrichtung steuern, sodass die Luft je nach Bedarf gekühlt oder geheizt werden kann. Weiterhin kann die Steuerungseinheit die Druckerhöhungsvorrichtung und/oder den Wasserabscheider in dem Frischluftpfad steuern.

Durch eine Steuerung der Temperiervorrichtung kann die zugeführte Frischluft mit einer Temperatur zugeführt werden, die optimal für die Stabilität des Prozesses ist. Durch eine Steuerung der Druckerhöhungsvorrichtung kann der Druck der zugeführten Luft auf ein Druckniveau erhöht werden, welches ein Einströmen von Frischluft in den Turbinenpfad erlaubt.

Die Steuerungseinheit gemäss der vorliegenden Erfindung kann dabei entweder als reine Steuereinheit oder auch als Regelungseinheit ausgebildet sein. Des Weiteren ist es möglich, dass einzelne Vorrichtungen, wie beispielsweise die Ventile gesteuert werden und andere Vorrichtungen wie Temperiervorrichtung oder Druckerhöhungsvorrichtung einen Regelkreis aufweisen.

Zur Lösung der Aufgabe führt weiterhin ein Verfahren zum Optimieren der Abgasnachbehandlung, insbesondere des Abgases eines Verbrennungsmotors wie vorhergehend beschrieben, welches die folgenden Schritte umfasst:
- Messen einer Abgastemperatur, bevorzugt im oder in der Nähe eines SCR-Reaktors durch einen Temperatursensor oder Bestimmen eines Lastbereiches des Verbrennungsmotors,
- Vergleich der gemessenen Abgastemperatur mit einem Sollbereich oder Sollwert oder Vergleich des Lastbereiches des Motors mit einem Tieflastbereich oder Tieflastwert, bevorzugt in einer Steuerungseinheit,
- bei Abweichung, insbesondere Unterschreitung, vom Sollbereich oder Sollwert oder Erreichen des Tieflastbereiches oder des Tieflastwertes, Öffnen eines Ablassventiles, so dass Luft aus dem Ladeluftreceiver in die Umgebung abgelassen wird.

Somit wird der Druck im Ladeluftreceiver gesenkt und dem Motor Luft mit niedrigerem Druck zugeführt. Dies führt zu einer niedrigeren Motoreffizienz und damit zu höheren Abgastemperaturen. Mit einem derartigen Verfahren wird ein zuverlässiges Funktionieren des SCR-Reaktors sichergestellt.

Ein Tieflastbereich liegt beispielsweise bei 0 - 50% Motorlast, insbesondere 0 - 40% bei ISO Normbedingungen, ein Tieflastwert bei 40% Motorlast. Der Solltemperaturbereich des Abgases liegt beispielsweise in einem Bereich von 250°C bis 500°C, die Solltemperatur des Abgases von der Harnstoffeindüsung beispielsweise in einem Bereich von mindestens 310°C.

Frischluft kann durch Öffnen eines Frischluftpfades in den Turbinenpfad eingeführt werden, sodass Luft in einen Turbinenpfad zwischen SCR-Reaktor und Turbine des Turboladers geleitet wird. Die Luft in dem Frischluftpfad wird bevorzugt derartig dosiert und bevorzugt temperiert, dass die Turboladerleistung optimiert wird. Somit wird der Betrieb des Verbrennungsmotors im optimalen Bereich für den Betrieb des Gesamtsystems gehalten.

Die Luft im Frischluftpfad kann durch eine Druckerhöhungsvorrichtung auf ein höheres Druckniveau eingestellt werden. Bevorzugt wird die Druckerhöhungsvorrichtung durch eine Zusatzturbine angetrieben, wobei die Zusatzturbine insbesondere von Luft aus dem Ladeluftreceiver und/oder elektrisch angetrieben wird.

Somit entstehen weniger Effizienzverluste, da die Luft, die aus dem Ladeluftreceiver abgelassen wird, zum Erhöhen des Druckniveaus der dem Turbinenpfad zugeführten Frischluft genutzt wird.

Im Folgenden wird die Erfindung in Ausführungsbeispielen anhand von Figuren näher erläutert. Hierbei zeigt:
- Fig. 1: eine schematische Darstellung einer ersten Ausführungsform der Erfindung,
- Fig. 2: eine schematische Darstellung einer zweiten Ausführungsform der Erfindung.

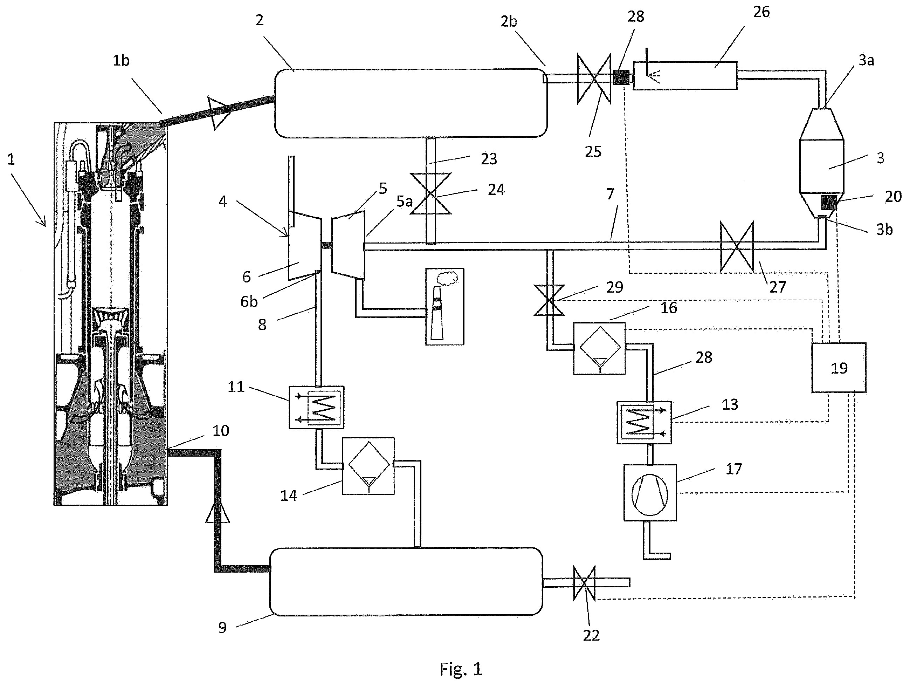

Figur 1 zeigt eine schematische Darstellung des Verbrennungsmotors 1, der ein Abgasreceiver 2 umfasst. Der Abgasreceiver 2 sammelt das Abgas aus den Zylindern des Verbrennungsmotos 1. Aus dem Abgasreceiver 2 wird das Abgas durch den SCR-Reaktor 3 und dann auf eine Turbine 5 des Turboladers 4 geleitet. Der selektive katalytische Reaktor 3 weist einen Eingang 3a und einen Ausgang 3b auf. Der Eingang 3a des SCR-Reaktors ist mit dem Ausgang 2b des Abgasreceivers verbunden. Aus dem Ausgang 3b des SCR-Reaktors 3 wird das Abgas durch Turbinenpfad 7 durch Turbineneingang 5a auf die Turbine 5 geleitet. Zwischen Abgasreceiver 2 und Eingang 3a des SCR-Reaktors 3 sind zusätzlich ein Abgasreceiver-Ausgangventil 25 und ein Harnstoffinjektor 26 angeordnet. Durch das Abgasreceiver-Ausgangsventil 25 kann der SCR-Reaktor 3 im Falle einer Störung oder eines Betriebes ohne SCR-Reaktor 3 abgeschaltet werden.

Kurz vor dem Harnstoffinjektor 26 ist optional in allen Ausführungsbeispielen zusätzlich ein Temperatursensor 28 angeordnet, mit dem die Abgastemperatur direkt vor der Harnstoffinjektion messbar ist. Der Temperatursensor 28 ist mit der Steuerungseinheit 19 verbunden, so dass Temperaturabweichungen des Abgases erkannt werden können und Massnahmen zur Erhöhung der Temperatur getroffen werden können.

Stromabwärts des Ausgangs 3b des SCR-Reaktors 3 ist weiterhin ein Turbinenpfad-Ventil 27 angeordnet, welches für den Fall des Nicht-Gebrauchs oder eines Störungsfalles ebenfalls den Ausgang 3b des SCR-Reaktors 3 abtrennbar macht. Die Turbine 5 des Turboladers 4 treibt einen Kompressor 6 an, durch den Frischluft verdichtet wird. Diese Frischluft wird durch Ladeluftpfad 8 vom Kompressorausgang 6b in den Ladeluftreceiver 9 geleitet. Der Ladeluftpfad 8 umfasst weiterhin ein Ladeluftkühler 11 sowie ein Wasserabscheider 14. Die komprimierte Frischluft aus dem Ladeluftpfad 8 wird in Ladeluftreceiver 9 geleitet und durch Lufteinlass 10 den Zylindern für den nächsten Verbrennungsprozess zugeführt.

Der Ladeluftreceiver 9 umfasst ein Ablassventil 22, durch welches Druck aus dem Ladeluftreceiver 9 abgelassen werden kann. Durch dieses Verringern des Druckes im Ladeluftreceiver 9 wird weniger Energie durch den Lufteinlass 10 in den Verbrennungsprozess zugeführt, wodurch die Effizienz des Verbrennungsprozesses sinkt und die Temperatur der Abgase steigt. Somit lässt sich die Temperatur der Abgase auf ein Niveau erhöhen, bei dem der SCR-Reaktor 3 funktioniert.

Zusätzlich ist Frischluft durch einen Frischluftpfad 28 in den Turbinenpfad einbringbar. Der Frischluftpfad 28 ist durch Frischluftpfadventil 29 vom Turbinenpfad 7 abtrennbar, sodass diese nur bei Bedarf zugeschaltet wird. Die zugeführte Frischluft in den Turbinenpfad 7 senkt die Temperatur des Gemisches aus Abgas und Frischluft, da Turbine 5 vom Turbolader 4 antreibt. Dadurch wird die Frischluft im Kompressor 6 des Turboladers 4 weniger komprimiert und im Ladeluftreceiver 9 entsteht ein geringeres Druckniveau. Somit wird auch hier die Effizienz des Verbrennungsprozesses gesenkt und damit die Abgastemperatur erhöht. Der Frischluftpfad 28 umfasst weiterhin eine Druckerhöhungsvorrichtung 17, stromabwärts der Druckerhöhungsvorrichtung 17 eine Temperiervorrichtung 13 und stromabwärts der Temperiervorrichtung 13 ein Wasserabscheider 16. Somit kann Druck, Temperatur und Feuchtigkeitsgehalt der zugeführten Frischluft kontrolliert werden und auf die benötigten Werte eingestellt werden. Ein derartiger Frischluftpfad 28 ermöglicht die Einführung von frischer, komprimierter und für den Zweck optimal temperierte Luft in den Turbinenpfad 7, insbesondere für den Fall, dass die Temperatur im SCR-Reaktor für den optimalen Betrieb des SCR-Reaktors 3 zu niedrig ist. Die Temperatur des Abgases im SCR-Reaktor 3 kann durch einen Temperatursensor 20 der im SCR-Reaktor 3 oder am Ende 3a des SCR-Reaktors 3 angeordnet ist, bestimmt werden. Alternativ kann die Maschinenlast als Näherung für den Temperaturbereich herangezogen werden. Insbesondere bei einer Maschinenlast des Verbrennungsmotors 1 von weniger als 40% der Maximallast bei ISO-Normbedingungen ist die Abgastemperatur erfindungsgemäss zu niedrig und muss für einen ordnungsgemässen Betrieb des SCR-Reaktors 3 erhöht werden.

Das Frischluftpfadventil 29 wird vorzugsweise durch eine Steuerungseinheit 19 gesteuert, sodass der Frischluftpfad 28 ausschliesslich zuschaltbar ist, wenn er tatsächlich benötigt wird. Die Steuerungseinheit 19 empfängt bevorzugt Temperatursignale von einem Temperatursensor 20, der sich im SCR-Reaktor 3 befindet und die Abgastemperatur bestimmt. Die Steuerungseinheit 19 steuert vorzugsweise weiterhin das Ablassventil 22 des Ladeluftreceivers 9, die Druckerhöhungsvorrichtung 17, die Temperiervorrichtung 13 und den Wasserabscheider 16. Somit kann die Steuerungsvorrichtung sämtliche Einrichtungen zur Anpassung der Temperatur und des Druckes des Abgases steuern.

Der Ladeluftpfad 8 umfasst einen Ladeluftkühler 11 und einen Wasserabscheider 14. Der Ladeluftkühler 11 temperiert die verdichtete Frischluft derartig, dass der Verbrennungsprozess im Verbrennungsmotor 1 für den gewünschten Zweck optimal ablaufen kann. Der Ladeluftreceiver 9 sammelt die Ladeluft, die von dem Ladeluftreceiver 9 zum Lufteinlass 10 des Verbrennungsmotors 1 geleitet wird. Das Senken des Druckes im Ladeluftreceiver 9 ist durch Ablassventil 22 sehr schnell möglich, sodass die Abgastemperatur schnell eingestellt werden kann.

Zwischen Abgasreceiver 2 und Turbinenpfad 7 ist ausserdem eine SCR-Umgehungsleitung 23 angeordnet, die ein SCR-Umgehungsventil 24 umfasst. Durch diese SCR-Umgehungsleitung 23 kann das Abgas aus dem Abgasreceiver 2 auf die Turbine 5 des Turboladers 4 geleitet werden, wenn der SCR-Reaktor 3 nicht mehr benötigt wird oder nicht mehr betrieben werden kann.

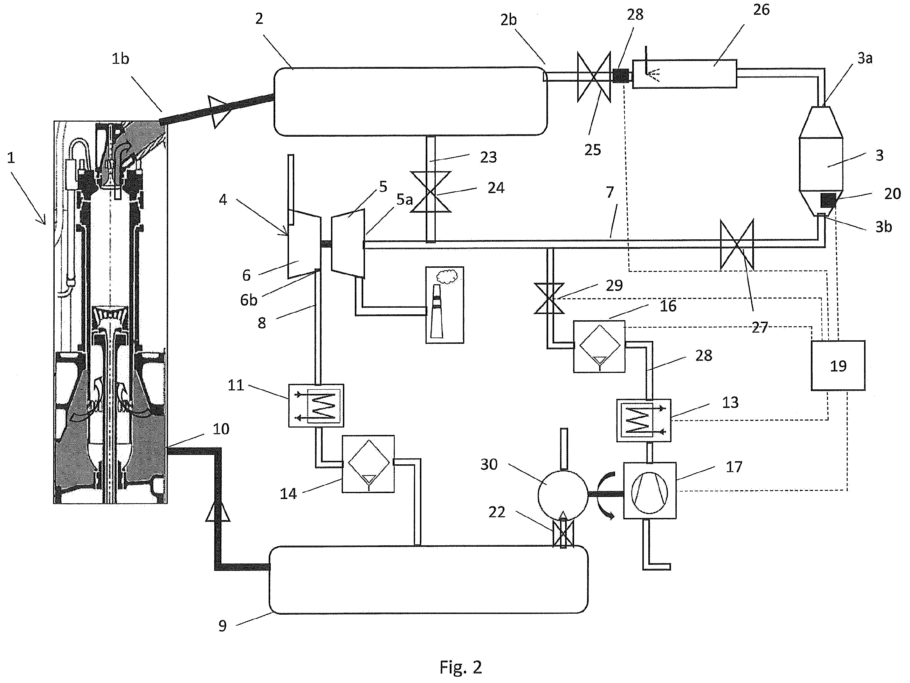

Die Ausführungsform in Figur 2 entspricht im Wesentlichen der Ausführungsform gezeigt in Figur 1, wobei die Luft, die durch Ablassventil 22 aus dem Ladeluftreceiver 9 gelassen wird, eine Zusatzturbine 3 antreibt. Die Zusatzturbine 30 ist in Wirkverbindung mit Druckerhöhungsvorrichtung 17, sodass der Gesamtwirkungsgrad erhöht wird, da die Luft aus Ablassventil 22 weiterhin verwendet wird und nicht einfach abgelassen wird. Die Zusatzturbine 30 kann optional oder zusätzlich elektrisch angetrieben werden.

## Patentansprüche

1. Verbrennungsmotor (1), insbesondere 2-Takt Schiffsmotor, bevorzugt Kreuzkopfverbrennungsmotor umfassend zumindest einen, bevorzugt eine Vielzahl von Zylindern, die mit einem Abgasreceiver (2) verbunden sind, einen SCR-Reaktor (3), dessen Eingang (3a) mit einem Ausgang (2b) des Abgasreceivers (2) verbunden ist, einen Turbolader (4) mit einer Turbine (5) und einem Kompressor (6), wobei der Turbineneingang (5a) mit einem Ausgang (3b) des SCR-Reaktors (3) über einen Turbinenpfad (7) verbunden ist, wobei die Turbine (5) des Turboladers (4) den Kompressor (6) antreibt und dessen Kompressorausgang (6b) über einen Ladeluftpfad (8) mit einem Ladeluftreceiver (9) verbunden ist, wobei der Ladeluftreceiver (9) mit einem Lufteinlass (10) der Zylinder des Verbrennungsmotors (1) verbunden ist und wobei der Ladeluftpfad (8) bevorzugt einen Ladeluftkühler (11) umfasst, **dadurch gekennzeichnet, dass** der Ladeluftreceiver (9) ein Ablassventil (22) umfasst.

2. Verbrennungsmotor nach Anspruch 1, **dadurch gekennzeichnet, dass** ein Frischluftpfad (28) mit dem Turbinenpfad (7) verbunden ist, so dass Frischluft in den Turbinenpfad (7) einbringbar ist, wobei bevorzugt in dem Frischluftpfad (28) eine Druckerhöhungsvorrichtung (17)ausgebildet ist

3. Verbrennungsmotor (1) nach einem der Ansprüche 1 oder 2, **dadurch gekennzeichnet, dass** der Frischluftpfad (28) eine Temperiervorrichtung (13) umfasst.

4. Verbrennungsmotor nach Anspruch 2, **dadurch gekennzeichnet, dass** die Druckerhöhungsvorrichtung (17) durch eine Zusatzturbine (30) antreibbar ist, wobei die Zusatzturbine (30) durch Luft aus dem Ladeluftreceiver (9) und/oder elektrisch antreibbar ist.

5. Verbrennungsmotor (1) nach einem der Ansprüche 2 bis 4, **dadurch gekennzeichnet, dass** der Frischluftpfad (28) durch eine Frischluftpfadabtrennvorrichtung, insbesondere ein Frischluftpfadventil (29), vom Turbinenpfad (7) abtrennbar ist.

6. Verbrennungsmotor (1) nach einem der vorhergehenden Ansprüche, **dadurch gekennzeichnet, dass** in einem Bereich zwischen Abgasauslass (1b) des Verbrennungsmotors (1) und Turbine (5) des Turboladers (4), insbesondere im SCR-Reaktor (3) oder am Eingang (3a) des SCR-Reaktors (3), ein Temperatursensor (20) zur Messung der Abgastemperatur ausgebildet ist.

7. Verbrennungsmotor (1) nach einem der vorhergehenden Ansprüche, **dadurch gekennzeichnet, dass** zwischen Abgasauslass (1b) des Verbrennungsmotors (1) und SCR Reaktor (3) ein Harnstoffinjektor (26) ausgebildet ist, wobei bevorzugt in einem Bereich zwischen Abgasauslass (1b) und Harnstoffinjektor (26) ein Temperatursensor (28) angeordnet ist.

8. Verbrennungsmotor (1) nach einem der vorhergehenden Ansprüche, **dadurch gekennzeichnet, dass** der Frischluftpfad (28) einen Wasserabscheider (16) umfasst, bevorzugt angeordnet stromabwärts der Temperiervorrichtung (13).

9. Verbrennungsmotor (1) nach einem der vorhergehenden Ansprüche, **dadurch gekennzeichnet, dass** der Ladeluftpfad (8) einen Wasserabscheider (14) umfasst, bevorzugt angeordnet stromabwärts des Ladeluftkühlers (11).

10. Verbrennungsmotor (1) nach einem der vorhergehenden Ansprüche, **dadurch gekennzeichnet, dass** der Verbrennungsmotor (1) eine Steuerungseinheit (19) umfasst, wobei das Ablassen von Luft aus dem Ladeluftreceiver und/oder die Frischluftzufuhr durch den Frischluftpfad (28) durch die Steuerungseinheit (19) steuerbar ist, bevorzugt abhängig von einem gemessenen Temperaturwert des Temperatursensors (20).

11. Verbrennungsmotor (1) nach Anspruch 10, **dadurch gekennzeichnet, dass** die Temperiervorrichtung (13) durch die Steuerungseinheit (19) steuerbar ist.

12. Verbrennungsmotor (1) nach einem der Ansprüche 10 oder 11, **dadurch gekennzeichnet, dass** die Druckerhöhungsvorrichtung (17) durch die Steuerungseinheit (19) steuerbar ist.

13. Verfahren zum Optimieren einer Abgasnachbehandlung eines Verbrennungsmotors (1), insbesondere eines Verbrennungsmotors (1) nach einem der Ansprüche 1 bis 12, umfassend die Schritte
- Messen einer Abgastemperatur, bevorzugt im oder in der Nähe eines SCR-Reaktors (3) durch einen Temperatursensor (20) oder Bestimmen eines Lastbereiches des Verbrennungsmotors (1),
- Vergleich der gemessenen Abgastemperatur mit einem Sollbereich oder Sollwert oder Vergleich des Lastbereiches mit einem Tieflastbereich oder einem Tieflastwert, bevorzugt in einer Steuerungseinheit (19),
- Bei Abweichung der gemessenen Temperatur, insbesondere bei Unterschreitung, vom Sollbereich oder Sollwert, oder Erreichen des Tieflastwertes oder des Tieflastbereiches, Öffnen eines Auslassventils, so dass Luft aus den Ladeluftreceiver in die Umgebung abgelassen wird.

14. Verfahren nach Anspruch 13, **dadurch gekennzeichnet, dass** durch Öffnen eines Frischluftpfades (28) Frischluft in einen Turbinenpfad (7) zwischen SCR-Reaktor (6) und Turbine (5) des Turboladers (4) geleitet wird.

15. Verfahren nach einem der Ansprüche 13 oder 14, **dadurch gekennzeichnet, dass** die Luft im Frischluftpfad (28) durch eine Druckerhöhungsvorrichtung (17) auf ein höheres Druckniveau eingestellt wird und bevorzugt die Druckerhöhungsvorrichtung (17) durch eine Zusatzturbine (30) angetrieben wird, wobei die Zusatzturbine (30) insbesondere von Luft aus dem Ladeluftreceiver (9) angetrieben wird.
